# EUROPEAN PATENT SPECIFICATION

(11) **EP 1 243 210 B1**
(45) Date of publication and mention of the grant of the patent: **11.08.2004**
(21) Application number: 01107306.1
(22) Date of filing: 23.03.2001
(51) Int. Cl.: A47J 31/40, B65D 81/00

(54) **Capsule and method for preparation of hot beverage and apparatus adapted for preparing a beverage from such a capsule**
Kapsel und Verfahren zum Zubereiten von Heissgetränken und eine solche Kapsel verwendender Apparat
Capsule et procédé pour la préparation de boissons chaudes et apparéil pour préparer une boisson à partir de cette capsule

(43) Date of publication of application: 25.09.2002
(73) Proprietor: SOCIETE DES PRODUITS NESTLE S.A., 1800 Vevey (CH)
(72) Inventor: Bardin, Ennio, 1350 Orbe (CH); Hu, Ruguo, New Milford, CT 06776 (US); Chrisman, Randall C., Southbury, CT 06488 (US)
(74) Representative: Borne, Patrice Daniel

(56) References cited:
- US-A- 4 136 202
- US-A- 5 242 702

## Description

The present invention relates to the preparation of a beverage from a capsule containing a dry food substance. More particularly, the invention relates to a capsule adapted for the preparation of a foamy beverage using hot water under pressure passing through the capsule. The invention also relates to a method for the preparation of a foamy beverage using such a capsule. The invention also relates to a beverage preparation device receiving such a capsule for preparing a foamy beverage.

Foamed beverages such as espresso, cappuccino and latte prepared from a single serve capsule are becoming more and more popular. The principle of using pre-metered and pre-packed portions of coffee or the like for the preparation of coffee or other beverages has already existed for a long time. It has the advantage that it facilitates the preparation of coffee while ensuring that the quality of the product remains relatively consistent. It also provides more convenience for the operator. The capsule usually sits in a leak-tight enclosure of a coffee-type machine and hot water is passed through the capsule under pressure. The use of roast-and-ground powder is widely utilized commercially in capsules that perforate under the build-up of pressure to release the extracted liquid. However, to date, there do not exist any systems of capsules adapted for soluble powder that would confer a sufficient level of quality and foam able to compete with the roast-and-ground segment on the market. Therefore, all the attempts for such soluble powder containing capsules have not met with commercial success to date.

A critical problem commonly met with the existing capsules comes from the fact that the pressure cannot build up sufficiently well to have the powder entirely and homogeneously mixed with water. Channeling problems are usually noticed within the powder cake causing privileged paths for water and zones which are not properly wetted by water. Therefore, the capsule can usually not be fully emptied or washed causing inconsistent dosage and powder waste left within the capsule. Other common problems met with the existing capsules relate to the generation of a poor foam or even no foam at all thereby producing beverages such as cappuccino or latte of very poor quality. As a result, these poor quality beverages get very little consumer acceptance.

Those problems are dependent upon the way the pressure builds up inside the capsule and the way the beverage is released into the cup. The building-up of the pressure and release are critical steps to ensure a product of satisfactory quality as well as to ensure a correct emptying or washing of the product inside the capsule.

Another problem results from the intensive mechanical interactions between the capsule and the means that exert pressure onto the capsule to effect the release of the beverage. Usually, the capsule is perforated by perforated means such as a corrugated or cutting surface or an opening element forcing a passage through the bottom of the capsule and positioning within the capsule. Such interactions have a tendency to generate bits of material from the capsule, such as plastic bits and the like, which may contaminate the beverage.

US 5,242,702 relates to a process in which water and air under pressure is injected through the entry face of a cartridge to move the lower face away from a filter and against a fixed central finger of the extraction device to tear the lower face which enables the liquid to be substequently removed under pressure.

The present invention has the object to provide a new type of capsule, which enables inside pressure building-up at a level required for a proper powder reconstitution or dissolution when producing the beverage. Another object of the invention is to provide a capsule capable of providing a beverage having an improved quality of foam resulting from the control of the release of the pressure built in the capsule before dispensing the beverage into the cup. Another object is to provide a capsule that reduces the severe mechanical interactions during the opening of the capsule for dispensing of the beverage thereby reducing the risks of producing bits of material such as small plastic pieces which could inadvertently mix with the beverage into the cup.

For this, the invention relates to a capsule for the preparation of a beverage obtained by supplying hot water within the capsule under pressure and releasing the beverage from the capsule; said capsule comprising a food substance therein, a first surface adapted to be traversed by a flow of water entering the capsule, a second surface adapted to be traversed by a flow of beverage exiting the capsule, wherein the second surface is adapted to deform outwardly upon action of the inside water pressure thereon and wherein said surface comprises at least one opening member capable of deforming inwards the capsule upon a mechanical reaction force applied from outside onto the opening member as a result of the deformation of the second surface due to the build-up of inside pressure deforming said second surface.

As a result of this, both the build-up of pressure inside the capsule and the release can be better controlled thereby providing an improvement of the quality of the beverage; i.e., a full powder reconstitution/dissolution with no waste inside and generation of good looking foam upon release of the pressure.

Preferably, the opening member comprises a continuous precut line cutting through the thickness of the second surface and further comprises a resilient folding means whereby the folding means is adapted to cause the opening member to fold upon action of said reaction force applied from outside onto the closure means to effect release of the beverage. The folding means may preferably be a single foldable portion arranged so that the opening member is capable of moving inwardly with respect to the rest of the second surface by folding along the foldable portion. Therefore, in addition to the advantages previously mentioned, such configuration induces less mechanical interactions as there is neither puncturing not cutting on the capsule. As a result, there are no risks of having bits of material from the capsule contaminating the beverage at the time the beverage is dispensed through the outlet to the cup.

In a preferred embodiment, the precut line is arranged so that the opening member forms a valve means that closes upon the build-up of pressure caused by the addition of water inside the capsule till at least a certain pressure level. The valve configuration reinforces the strength of the opening member to the building-up of the inside pressure build-up thereby allowing a sufficient level of pressure to install within the capsule and consequently delaying the release of the beverage. Therefore, it is made possible to control to an appropriate level of pressure inside the capsule which is necessary for reconstituting, such as preferably by dissolution, the beverage before the beverage is released. As preferred embodiments, the precut line may be beveled or, alternatively, be stepped. In a more general manner, the valve means comprises at least one positive edge of the opening member that is capable of holding on a complementarily shaped edge of the opening as a response to the inside pressure thereby causing the closure of the opening member.

In a preferred embodiment, the foldable portion is of a transversal dimension lower than the peripheral dimension of the precut line. Therefore, the folding of the opening member is facilitated while lowering the risks of rupture or breakage of small bits of capsules.

Still preferably, the precut line has a width of from 0.05 to 0.3 mm, preferably of from 0.1 to 0.2 mm. Such dimension is suitable for providing a sufficient build-up of the inside pressure while allowing the capsule to deform outwardly until a reaction force can act to release the pressure for providing a high quality and foamy beverage. As defined, the width is also determined with respect to the usual powder size suitable for a proper beverage reconstitution so that no significant amount of powder can inadvertently exit the capsule when the capsule is stored before use.

In another aspect, the invention relates to a method for preparing a hot beverage using a capsule as previously mentioned comprising the step of providing such capsule, providing hot water entering the first surface and mixing the food substance with the water and build-up a pressure inside the capsule to prepare a beverage; providing means for generating a reaction force from outside of the capsule and opening the second surface by applying said reaction force onto the opening member as a result of the building-up of inside pressure deforming said second surface.

Preferably, the reaction force generating means and opening member are distant a certain gap before the pressure builds up in the capsule. The gap is determined to take into account the level of pressure desired inside the capsule that translates into a deformation of the capsule; i.e., of the second surface, which closes the gap and effect opening of the capsule. Therefore, the opening member is adapted to interact with the capsule until a certain inside pressure has been created within the capsule thereby ensuring a controlled building-up of the inside pressure and a delaying of the release of pressure at the required level for improving the dissolution and the quality of foam of the resulting product. In such configuration, the capsule comprises valve means as previously defined so as to resist to the increase of the inside pressure caused by the water entering the capsule.

More preferably, the opening of the capsule may be effected by build-up of pressure inside the capsule at a level sufficient to cause the second surface to deform outwards and the opening member becomes contacted by the reaction force generating means thereby causing the opening means to resiliently deform inwardly and consequently effecting the release of the beverage. The opening of the capsule may thus be effected automatically in a very precise and reproducible manner as the capsule "inflates" until the opening of the capsule is actuated by the reaction force generating means. Therefore, the reaction force generating means may preferably be distant a certain predetermined gap from the opening member and be positioned in a fixed position with respect to opening member; such predetermined gap corresponding to the required level of pressure deemed necessary for the intended beverage.

In another aspect the invention relates to device for preparing a beverage receiving a capsule as defined previously according to independent claim 27.

Preferably, the pressure surface is bulged to limit the size of the opening of the capsule. Such limitation of the size of the opening permits to better control the pressure release for a better foam but also reduces the stress on the opening member.

The release of the beverage may also be better ensured if one provides channels extending along or through the pressure surface of the reaction force generating means thereby guiding the foam and liquid toward the dispensing outlet. The size and shape of those channels can be optimized to improve the generation of foam, as well, as to regulate the evacuation of liquid flow.

Specific embodiments of the present invention will now be described with reference to the drawings of which:
Fig. 1 is a perspective view of a capsule according to the invention;
Fig. 2 is a cross sectional view along line A-A of the capsule of Fig. 1;
Fig. 3 is a bottom view of the capsule of Fig. 1 and 2;
Fig. 3A shows a detail along line B-B of Fig. 3;
Fig. 3B shows a variant of Fig. 3A;
Fig. 4 illustrates a cross sectional diagrammatic view of the capsule as positioned at rest within the housing of the beverage preparation unit;
Fig. 4A illustrates a detail of the plunger of Fig. 4;
Fig. 4B illustrates a variant of Fig. 4A;
Fig. 5 is a view similar to Fig. 4 but with water being introduced within the capsule and inside pressure starting to build up;
Fig. 6 is a view similar to Fig. 4 and 5 but with the inside pressure at a level which causes the opening of the capsule and release of the beverage;
Fig. 7 is a view of detail of Fig. 5;
Fig. 8 is a view of detail Fig. 6;
Fig. 8A is a top view of the plunger showing the line of demarcation of the opening when fitting on the pressure surface of the plunger;
Fig. 9 is an embodiment of the opening means of the beverage preparation unit;
Fig. 10 is a top view of the opening means of Fig. 9;
Fig. 11 is another embodiment of the opening means;
Fig. 12 is a cross sectional view of the capsule as positioned at rest within the housing of the beverage preparation unit according to another embodiment of the invention.

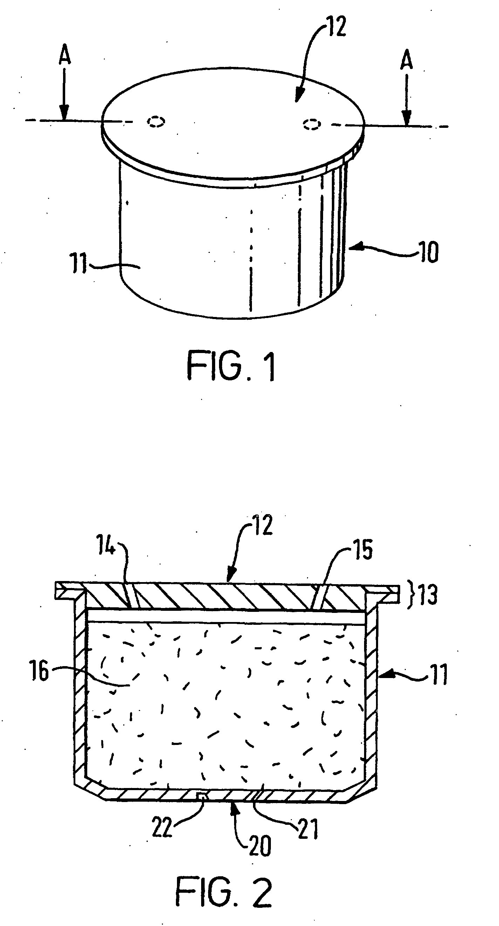

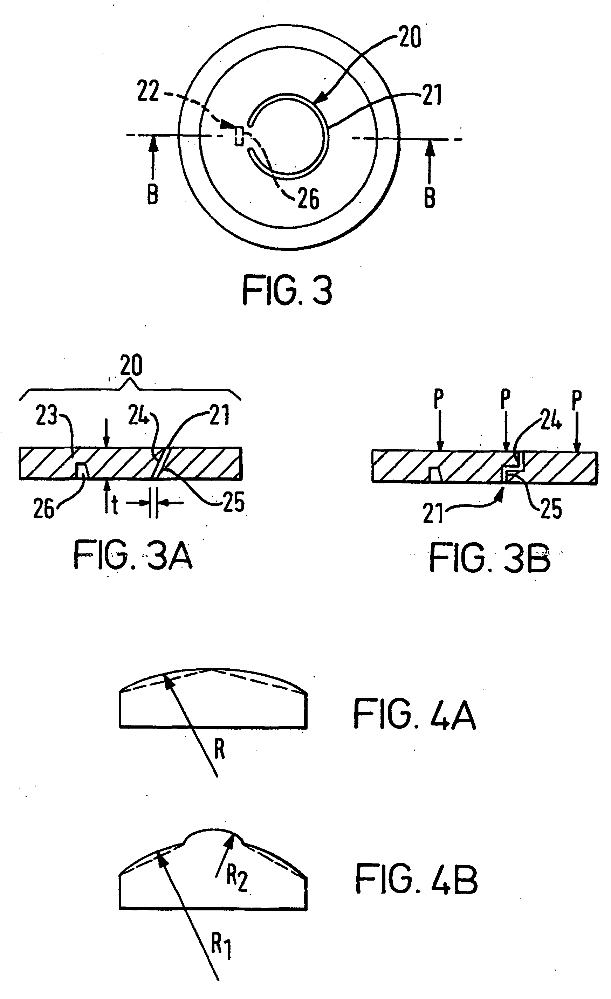

Referring to Fig. 1 to 3 and 3A, the invention illustrates a capsule 10 adapted to contain a dry food substance, preferably a substance that is soluble by addition of a diluent such as hot water and the like to form a foamy beverage. As "foamy beverage" it is meant a beverage such as coffee, cappuccino, latte, tea, milk, cream-based beverage, cocoa, stock and a combination thereof. The capsule 10 may preferably comprise a cup-shaped body 11 and a coverlid 12. The lid forms the first surface of the capsule intended for the water to enter therethrough. The lid 12 may be attached to the body along a common peripheral edge 13 and sealed to the body by any suitable means such as by welding, adhesive or hot melt sealing and/or mechanical connection. The lid 12 may be provided with two small and diametrically opposed holes 14, 15 thereby leading to an internal cavity 16 containing the food substance. At the opposite side, a bottom side 17 is provided which forms a second surface of the capsule intended for the exit of the liquid beverage. The water is supposed to enter the first surface or lid 12 through the holes, create solubilization of the food substance and then, exit through the second surface or bottom side 17 as it will be explained in greater details later on. In an alternative, the two holes may be omitted and the lid of the capsule may be punctured at the time the beverage is prepared in the unit as it is also well known in the art.

The body 11 of the capsule is preferably constituted of a pressure resistant but elastically deformable material such as a thin, semi-rigid plastic material. More particularly, the second surface or bottom side 17 of the capsule should be able to withstand an inside pressure of several bars ; i. e., 1.5 to 15 bars, preferable 2-6 bars, while being capable of expanding outwardly as a response to such building-up of pressure. For that, the capsule may be made of plastic such as PP and PE or any other suitable foodgrade and heat and pressure resistant polymer material having a thickness of between 0.25 to 2 mm. As illustrated in Fig. 2 to 3A, the bottom side comprises an opening member 20. The opening member includes a continuous precut line 21 which traverses the thickness "t" of the bottom side. The precut line 21 is preferably a portion of circle although its geometry is not limiting but may also encompass a large choice of other possible shapes. Folding means 22 is further provided which is arranged with the precut line so that the opening member is capable of folding inwardly along a privileged folding line. For that, the folding means may preferably be a single foldable portion 23 located between both ends of the precut line 21. The foldable portion is preferably non-recovering in the sense that when submitted to a flexure, the opening member does not recover its initial position of before the flexure. This important aspect ensures that when the pressure in the capsule starts decreasing due to the release effect, the opening remains open and the beverage can be fully dispensed.

In the preferred embodiment as shown, the opening member forms a valve means which is arranged so that it can withstand a certain inside pressure while substantially closing and, conversely can open inwards as a response to an outside reaction force applied thereon. For that, the precut line 21 is beveled with the outer peripheral edge 24 of the opening member being capable of holding on a complementary edge 25 of the bottom side when a pressure from inside builds up due to water under pressure entering the capsule. Therefore, the precut line is configured so that the section of the opening member gradually decreases outwards. In order to facilitate the inwardly oriented folding of the opening member, a line of weakness 26 may further be provided that promotes bending of the opening member along the privileged line. Such line of weakness may, for instance, be a short outer groove or any suitable equivalent means.

The embodiment of the capsule as shown in Fig. 1 to 3 and 3A is the preferred mode although other variants may provide equivalent results. Its has been determined that the precut line should preferably extend along a portion significant enough to be easily bent while limiting the risks of rupturing the plastic material. Preferably, the portion of the precut line should extend along an angular path of from 270 to 350 degrees, preferably 290 to 300 degrees. Similarly, the width of the precut line may be a determining factor that influences the building-up of inside pressure while it also ensures no significant amount of powder can escape from the capsule in the stored conditions. Therefore, it has been determined that the width of the precut line should preferably range from 0.05 to 0.3 mm, preferably from 0.1 to 0.2 mm.

Fig. 3B illustrates a possible variant for the opening member in a configuration wherein it still acts as a valve means having the ability to withstand a certain inside pressure level and conversely, opens under the effect of the outside reaction force. In this configuration, the precut line is shaped to form a stepped configuration with the peripheral edge 24 of the opening member being complementary shaped to be able to hold on the outer edge 25 of the opening of the bottom side as a result of a certain increase of pressure inside the capsule.

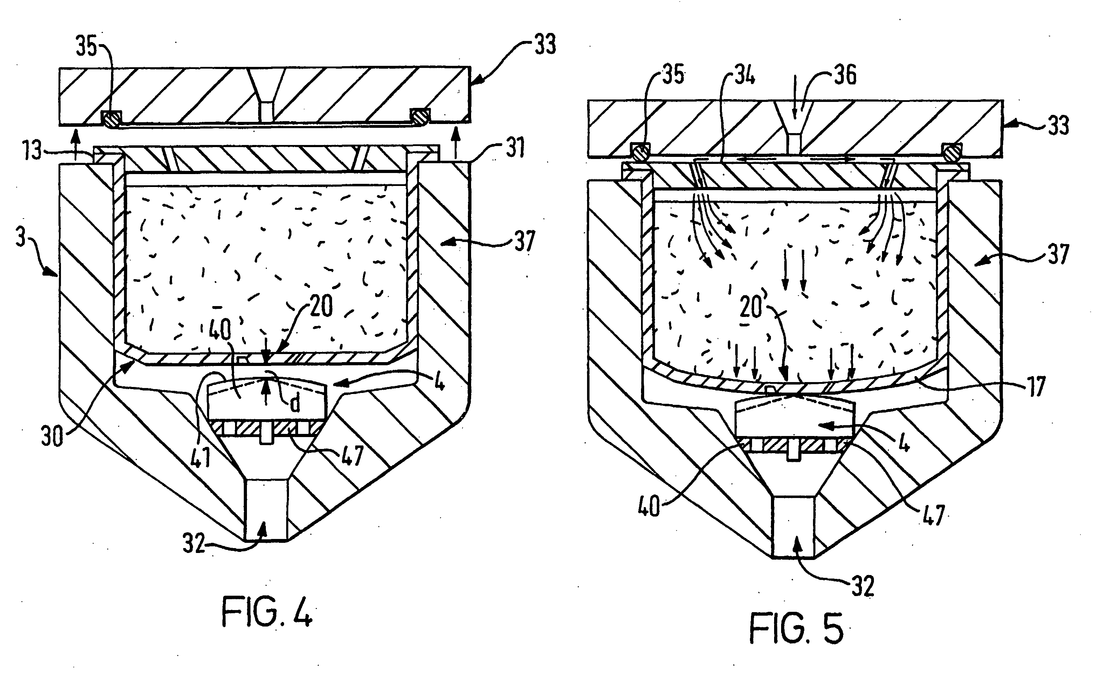

Fig. 4A illustrates the capsule of fig. 1 to 3A when lodged in position within a beverage preparation unit 3. The unit comprises a main housing 30 of a size adapted to receive the body of the capsule while the upper edge 13 of the body is retained along a complementary peripheral shoulder 31 of the housing. In the bottom part of the housing 30 is provided a beverage outlet 32 for the release of the beverage toward a dispensing area (not shown).

According to an important aspect of the invention, the beverage preparation unit comprises a means 4 for providing a mechanical reaction force to the opening member 20 of the capsule as a response to the deformation of the capsule; i.e., the outward or downward expansion of the second surface, due to the building-up of inside pressure during the water filling of the capsule. For that, the reaction force generating means 4 consists of a plunger 40 vertically aligned with the opening member 20 and the outlet 32. The plunger 40 is fixed in position on an apertured support 47 that leaves the outlet substantially open. More precisely, the plunger 40 includes a pressure surface 41 adapted to hold on the opening member 20. The pressure surface is arranged so that it has a surface larger than the surface of the opening member. The pressure surface also has a non-aggressive shape not to cause puncturing or piercing of the capsule but, on the contrary, to effect opening of the opening member 20 by gently moving the member inwards along an opening path of limited angulation along the folding portion of the member. For that, it is preferred to have a pressure surface that is bulged.

FIG. 4 illustrates a first embodiment of the plunger wherein the pressure surface is a single bulged portion of radius R. Suitable bulge radius R may preferably be of from about 40 to 80 mm. In order to release the pressure in a controlled manner, channels 42 are provided at the surface of the plunger which extend from the area intended to be covered by the opening when the plunger contacts the opening member. The channels preferably extend radially so as to distribute uniformly the foam and then, the liquid within the outlet. The channels are important since they determine the flow velocity and produces turbulences that creates the foam. Other configurations of channels could also possibly be proposed such as several channels which traverse through the plunger. Fig. 4B illustrates a second possible embodiment wherein the pressure surface is composed of a first main bulged portion of radius R₁ intersected in the center by a second smaller circular portion of radius R₂; with R₂ being smaller than R₁. As a preferred example, R₁ ranges from 40 to 80 mm and R₂ ranges from 20 to 40 mm.

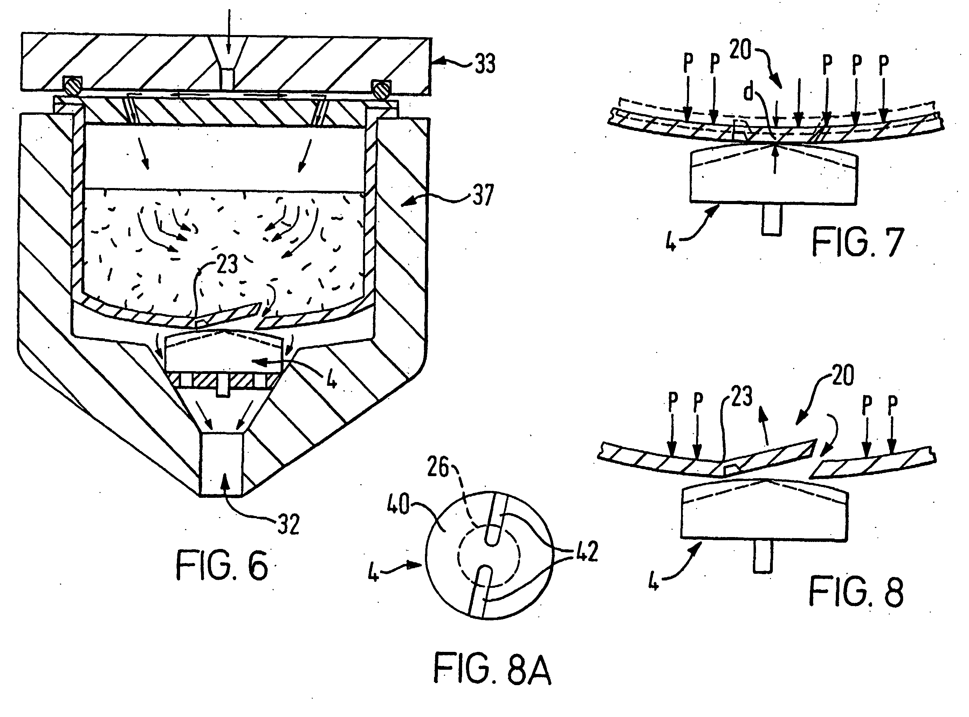

As shown in Fig. 4 and 7, when in at rest position; i.e., before the water pressurization, the housing of the unit is dimensioned so that the capsule, more specifically the opening member 20 of the capsule, is kept distant the pressure surface 41 a certain gap "d" necessary to generate a desired increase of pressure inside the capsule as the valve means of the opening member is sufficient to withstand that amount of pressure.

The preparation cycle is demonstrated in accordance with Fig. 4 to 8. In a first stage, the capsule is positioned in the housing of a first unit part 37 and locked in position by means of an upper part 33 of the unit. The upper unit part 33 comprises a water distribution chamber 34, a water inlet 36 and a watertightness means 35 adapted to render the chamber watertight upon closing. The lower unit part 37 and the upper unit part 33 engage together in closure by any suitable driving means such as an hydraulically driven assembly (not shown). In a closed configuration of the housing, the plunger 40 is positioned at a distance from the capsule and there is a small predetermined gap "d" between the capsule opening member and the pressure surface (Fig. 4). The gap is determined as a function of the intended pressure to build inside the capsule. Repeated tests have shown that it should preferably be of from 0 to 5 mm, preferably 0.1 to 3 mm.

As shown by Fig.5, pressurized hot water enters the capsule through the two small holes 14, 15 of the lid and mix with the powder inside the capsule. As more water enters the capsule, the inside pressure starts building up so causing the body of the capsule, and more particularly, its bottom side, to deform outwardly. As the bottom deforms, the distance between the plunger and the capsule starts lessening until the opening member 20 of the capsule comes into abutting contact with the pressure surface 41 of the plunger as shown in Fig. 5. The capsule keeps deforming outwards till the pressure surface of the plunger starts applying a reaction force to the inside pressure. Such reaction force as gradually increasing acts on the opening member which flexes along its folding portion 23 (Fig. 6 and 8). As shown by Fig. 8 and 8A, in its periphery, the bulged surface 40 is adapted to substantially fit the peripheral contour or demarcation line 26 of the opening as the surface of the capsule deforms outwards while pushing the opening member in the center of the surface. As the opening member moves inwards, the liquid mixture which has reached a desired pressure inside is released through the radial channels 42 provided on the pressure surface. The pressure that releases after exiting the channels generates foams and the pressure inside the capsule stabilized (Fig. 6). At the end of the dispensing, the water stops entering the capsule and the plunger separates from the capsule as the capsule substantially or partially recovers its initial dimension due to the release of inside pressure. As the opening member has the ability to remain open, the beverage remaining inside the capsule can be fully discharged to the outlet.

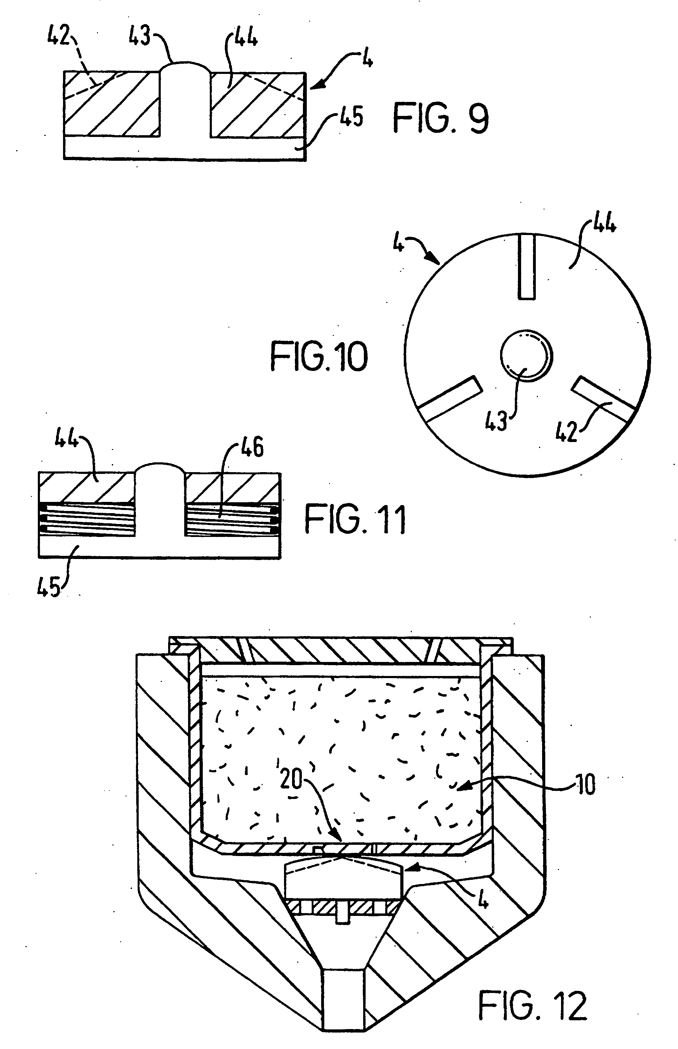

Fig. 9 and 10 illustrate a variant of the reaction force generating means or plunger 4. In this variant, the pressure surface comprises a solid central part 43 surrounded by an outer resilient part 44. The solid central part may be a metal or solid plastic piece forming a rod extending from a support base 45 of the plunger. The outer part 44 may be a rubber or soft plastic annular piece that is capable of compressing when contacting the opening member of the capsule. The compressibility of the outer part 44 may be particularly important depending upon the particular geometry and configuration of the capsule to reduce the risks of damaging the capsule.

Fig. 11 refers to another variant of the plunger which differs from the previous version by the fact the outer part remains a solid piece but is spring biased using a spring element 46 located between the outer part 44 and the supportive base 45.

Fig. 12 is another possible embodiment of the invention wherein the reaction force generating means 4 is positioned to hold the capsule 10 before the capsule is even pressurized with water. In that particular case, the opening member 20 may not necessarily be a valve means but may require the support of the reaction force generating means to prevent opening before a sufficient pressure level is achieved inside the capsule. More particularly, the opening member 20 of the capsule may include a precut line that is not beveled or stepped but simply cut normal to the bottom surface of the capsule so that the pressure surface forces the opening member to open.

In the foregoing description, the reference to the term "capsule" has been made for designating any sort of containers suitable for the intended purpose. Therefore, this term "capsule" should not be construed in a restricted way. Similarly, the term "plunger" has been designated in place of the term "reaction force generating means" for facilitating the comprehension and should also not be construed in a limitative way but may encompass various designs and/or configurations suitable for the intended purpose. The terms "inwards" or "inwardly", "outwards" or "outwardly" or "downwards" or "downwardly" have been used in reference to the capsule when in operation in the beverage preparation apparatus; more particularly, to designate the direction of deformation of the second surface or bottom side of the capsule and its opening member.

The invention described and claimed herein is not strictly limited in scope by the specific embodiments herein disclosed, since these embodiments are intended as illustration of several aspects of the invention. Any equivalent embodiments are intended to be within the scope of this invention. Indeed, various modifications of the invention will become apparent those skilled in the art from the foregoing description. Such modifications are also intended to fall within the scope of the appended claims.

## Claims

1. Capsule (10) for the preparation of a beverage obtained by supplying hot water within the capsule under pressure and releasing the beverage from the capsule; said capsule comprising a food substance therein, a first surface (12) adapted to be traversed by a flow of water entering the capsule, a second surface (17) adapted to be traversed by a flow of beverage exiting the capsule, wherein the second surface is adapted to deform outwardly upon action of the inside water pressure thereon **characterised in that** said surface comprises at least one opening member (20) capable of deforming inwards the capsule upon a mechanical reaction force applied from outside onto the opening member as a result of the deformation of said second surface due to the build-up of inside pressure.

2. Capsule according to claim 1, wherein the opening member (20) comprises a continuous precut line (21) cutting through the thickness of the second surface and wherein the opening member comprises a resilient folding means (22) which is adapted to cause the opening member to fold upon action of said reaction force applied from outside onto the closure means to effect release of the beverage.

3. Capsule according to claim 2, wherein the resilient folding means (22) comprises a single foldable portion (23) arranged with respect to said precut line so that the opening member is capable of moving inwardly by folding along said foldable portion.

4. Capsule according to claim 2 or 3, wherein the precut line (21) is arranged so that the opening member (20) forms a valve means that is capable of closing upon the build-up of pressure caused by the addition of water inside the capsule till at least a certain pressure level.

5. Capsule according to claim 4, wherein the precut line (21) forms a valve means with a positive edge (24) of the opening member (20) holding on a complementarily shaped edge (25) of the opening upon the build-up of pressure inside the capsule.

6. Capsule according to claim 5, wherein the precut line (21) is beveled.

7. Capsule according to claim 5, wherein the precut line (21) is stepped.

8. Capsule according to claim 2 or 3, wherein the foldable portion (23) is ofa transversal dimension lower than the peripheral dimension ofthe precut line (21).

9. Capsule according to claim 8, wherein the foldable portion (23) further comprises a line of weakness (26) promoting bending of the opening member (20) along a privileged line.

10. Capsule according to any of claims 2 to 9, wherein the precut line (21) has a width of from 0.05 to 0.3 mm, preferably of from 0.1 to 0.2 mm.

11. Capsule according to any of claims 2 to 10, wherein the opening member (20) is demarcated by the precut line (21) so as to substantially form a portion of circle.

12. Capsule according to any of claims 2 to 11, wherein the portion of circle is of from 270 to 350 degrees.

13. Capsule according to claim 12, wherein the portion of circle has a diameter of from 3 to 15 mm.

14. Capsule according to any of the preceding claims, wherein the food substance is a soluble food product.

15. Capsule according to any of the preceding claims, wherein the soluble food product is selected among the group consisting of coffee, tea, cocoa, milk, and combinations thereof.

16. Method for preparing a foamy hot beverage comprising :
providing a capsule (10) according to claim 1;
providing hot water entering the first surface and mixing the food substance with the water and build-up a pressure inside the capsule to prepare a beverage;
providing means (4) for generating a reaction force from outside of the capsule and,
opening the second surface (17) by applying said mechanical reaction force onto the opening member (20) as a result of the build-up of inside pressure deforming said second surface.

17. Method according to claim 16, wherein the opening member (20) and the reaction force generating means (4) are kept distant a certain predetermined gap (d) before the required pressure builds up in the capsule

18. Method according to claim 17, wherein said gap (d) is of from 0 to 5 mm, preferably 0.1 to 3 mm.

19. Method according to claim 17 or 18, wherein opening of the opening member (20) is effected by build-up pressure inside the capsule sufficiently to cause the second surface (17) to deform outwards and to be held on the reaction force generating means (4) thereby causing the opening means to deform the opening means (20) inwardly and to consequently effect release of pressure and dispense of the beverage.

20. Method according to any of claims 16 to 19, wherein the reaction force generating means (4) is fixed in position with respect to the opening member (20).

21. Method according to any of claims 17 to 20, wherein the reaction force generating means (4) comprises a pressure surface (41) adapted to hold on the opening member (20); said surface being larger than the opening member so as to effect the opening of the opening member without the surface fully entering within the capsule (10).

22. Method according to claim 21, wherein the pressure surface (41) is a bulged surface, with the same or smaller radius of the center part.

23. Method according to claim 22, wherein the bulged pressure surface has a portion of radius of from about 40 to 80 mm.

24. Method according to claim 22 or 23, wherein the bulged pressure surface (41) is solid.

25. Method according to claim 21, wherein the pressure surface comprises a solid central part (43) and an outer resilient part (42) surrounding the central part; said central part (43) being of section lower than the opening member (20) whereas the outer resilient part (42) having a section higher than the opening member.

26. Method according to any of claims 21 to 25, wherein the pressure surface comprises at least one radially oriented channel (42) for releasing the beverage along the pressure surface (44).

27. Device for preparing a foamy hot beverage comprising an apparatus (3) and a capsule (10), according to claim 1 wherein said apparatus (3) comprises housing arranged for lodging the capsule in a substantially fixed position whereas allowing at least the second surface (17) to deform outwardly upon the action of inside pressure build-up and, a reaction force generating means (4) **characterized in that** the reaction force generating means (4) is adapted to hold on the opening member (20) and to cause the opening member to move inwardly so as to effect release of the beverage as a result of the pressurization of the capsule with water and comprises a pressure surface (41) adapted to hold on the opening member in reaction of the inside pressure and wherein said surface (41) being larger than the opening member (20).

28. Device according to claim 27, wherein the pressure surface (41) is a bulged surface.

29. Device according to claim 27, wherein the pressure surface comprises a solid central part (43) and an outer resilient part (44) surrounding the central part; said central part being of section lower than the opening member whereas the outer resilient part having a section higher than the opening member.

30. Device according to any of claims 27 to 29, wherein the pressure surface (41) is arranged at a certain predetermined gap (d) from the opening member of the capsule before pressurization takes place so as to delay holding on the opening member (20) and consequently opening until a sufficient pressure is built up in the capsule.

31. Device according to claim 27 to 30, wherein said reaction force generating means (4) includes means for channelling the foam and liquid.

## Patentansprüche

1. Kapsel (10) für die Zubereitung eines Getränks, das durch Liefern von heißem Wasser unter Druck in die Kapsel und Entlassen des Getränks aus der Kapsel erhalten wird, wobei die Kapsel in ihr eine Lebensmittelsubstanz enthält, wobei eine erste Fläche (12) eingerichtet ist, um von einem Wasserfluß durchquert zu werden, der in die Kapsel eintritt, wobei eine zweite Fläche (17) eingerichtet ist, um von einem Getränkefluß durchquert zu werden, der die Kapsel verläßt, wobei die zweite Fläche eingerichtet ist, um sich nach außen aufgrund der Wirkung des inneren Wasserdrucks darauf zu verformen, **dadurch gekennzeichnet, daß** die Fläche zumindest ein Öffnungsglied (20) umfaßt, das fähig ist, sich von der Kapsel aufgrund einer mechanischen Reaktionskraft nach innen zu verformen, die von außen auf das Öffnungsglied als eine Folge der Verformung der zweiten Fläche aufgrund des Aufbaus des Innendrucks ausgeübt wird.

2. Kapsel nach Anspruch 1, bei der das Öffnungsglied (20) eine zusammenhängende Vorschnittlinie (21) umfaßt, die durch die Dicke der zweiten Fläche schneidet, und bei der das Öffnungsglied eine elastische Faltvorrichtung (22) umfaßt, die eingerichtet ist, um das Öffnungsglied zu veranlassen, sich aufgrund der Wirkung der von außen auf die Verschlußvorrichtung ausgeübten Reaktionskraft zu falten, um das Entlassen des Getränks zu bewirken.

3. Kapsel nach Anspruch 2, bei der die elastische Faltvorrichtung (22) einen einzelnen faltbaren Abschnitt (23) umfaßt, der bezüglich der Vorschnittlinie derart angeordnet ist, daß das Öffnungsglied fähig ist, sich durch Falten entlang des faltbaren Abschnitts einwärts zu bewegen.

4. Kapsel nach Anspruch 2 oder 3, bei der die Vorschnittlinie (21) derart angeordnet ist, daß das Öffnungsglied (20) eine Ventilvorrichtung bildet, die fähig ist, beim Aufbau von Druck zu schließen, der durch die Zugabe von Wasser in die Kapsel bewirkt wird, bis zumindest zu einem bestimmten Druckwert.

5. Kapsel nach Anspruch 4, bei der die Vorschnittlinie (21) eine Ventilvorrichtung mit einer stabilen Kante (24) des Öffnungsglieds (20) bildet, das sich an der komplementär geformten Kante (25) der Öffnung aufgrund des Druckaufbaus in der Kapsel hält.

6. Kapsel nach Anspruch 5, bei der die Vorschnittlinie (21) abgeschrägt ist.

7. Kapsel nach Anspruch 5, bei der die Vorschnittlinie (21) abgestuft ist.

8. Kapsel nach Anspruch 2 oder 3, bei der der faltbare Abschnitt (23) eine Querabmessung aufweist, die geringer als die Umfangsabmessung der Vorschnittlinie (21) ist.

9. Kapsel nach Anspruch 8, bei der der faltbare Abschnitt (23) des Weiteren eine Schwächungslinie (26) umfaßt, die das Biegen des Öffnungsglieds (20) entlang einer bevorzugten Linie fördert.

10. Kapsel nach einem der Ansprüche 2 bis 9, bei der die Vorschnittlinie (21) eine Breite von 0,05 bis 0,3 mm aufweist, vorzugsweise von 0,1 bis 0,2 mm.

11. Kapsel nach einem der Ansprüche 2 bis 10, bei der das Öffnungsglied (20) durch die Vorschnittlinie (21) demarkiert ist, um im Wesentlichen einen Kreisabschnitt zu bilden.

12. Kapsel nach einem Ansprüche 2 bis 11, bei der der Kreisabschnitt von 270 bis 350 Grad beträgt.

13. Kapsel nach Anspruch 12, bei der der Kreisabschnitt einen Durchmesser von 3 bis 15 mm aufweist.

14. Kapsel nach einem der vorhergehenden Ansprüche, bei der die Lebensmittelsubstanz ein lösliches Lebensmittelprodukt ist.

15. Kapsel nach einem der vorhergehenden Ansprüche, bei der das lösliche Lebensmittelprodukt aus der Gruppe ausgewählt ist, die aus Kaffee, Tee, Kakao, Milch und Kombinationen davon besteht.

16. Verfahren zum Zubereiten eines schaumigen Heißgetränks mit:
Bereitstellen einer Kapsel (10) nach Anspruch 1;
Bereitstellen von heißem Wasser, das durch die erste Fläche tritt und Mischen der Lebensmittelsubstanz mit dem Wasser und Aufbau eines Drucks in der Kapsel, um ein Getränk zuzubereiten;
Bereitstellen einer Vorrichtung (4) zum Erzeugen einer Reaktionskraft von außerhalb der Kapsel, und
Öffnen der zweiten Fläche (17) durch Ausüben der mechanischen Reaktionskraft auf das Öffnungsglied (20) als ein Ergebnis des Aufbaus von Innendruck, der die zweite Fläche verformt.

17. Verfahren nach Anspruch 16, bei dem das Öffnungsglied (20) und die eine Reaktionskraft erzeugende Vorrichtung (4) einen bestimmten vorbestimmten Spalt (d) entfernt gehalten werden, bevor sich der erforderliche Druck in der Kapsel aufbaut.

18. Verfahren nach Anspruch 17, bei dem der Spalt (d) von 0 bis 5 mm, vorzugsweise 0,1 bis 3 mm, beträgt.

19. Verfahren nach Anspruch 17 oder 18, bei dem das Öffnen des Öffnungsglieds (20) durch einen Druckaufbau in der Kapsel bewirkt wird, der hinreichend ist, um die zweite Fläche (17) zu veranlassen, sich nach außen zu verformen und an der eine Reaktionskraft erzeugenden Vorrichtung (4) gehalten zu werden, wodurch die Öffnungsvorrichtung veranlaßt wird, die Öffnungsvorrichtung (20) nach innen zu verformen, und folglich das Entlassen von Druck und das Ausgeben des Getränks zu bewirken.

20. Verfahren nach einem der Ansprüche 16 bis 19, bei dem die eine Reaktionskraft erzeugende Vorrichtung (4) bezüglich des Öffnungsglieds (20) in Position fixiert ist.

21. Verfahren nach einem der Ansprüche 17 bis 20, bei dem die eine Reaktionskraft erzeugende Vorrichtung (4) eine Druckfläche (41) umfaßt, die eingerichtet ist, um sich an dem Öffnungselement (20) zu halten, wobei die Fläche größer als das Öffnungsglied ist, um das Öffnen des Öffnungsglieds zu bewirken, ohne daß die Fläche voll in die Kapsel (10) eintritt.

22. Verfahren nach Anspruch 21, bei dem die Druckfläche (41) eine gewölbte Fläche ist, wobei der Mittelteil den gleichen oder einen kleineren Radius aufweist.

23. Verfahren nach Anspruch 22, bei dem die gewölbte Druckfläche (41) einen Abschnitt mit einem Radius von ungefähr 40 bis 80 mm aufweist.

24. Verfahren nach Anspruch 22 oder 23, bei dem die gewölbte Fläche (41) stabil ist.

25. Verfahren nach Anspruch 21, bei dem die Druckfläche einen stabilen Mittelteil (43) und einen äußeren elastischen Teil (42) umfaßt, der den Mittelteil umgibt, wobei der Mittelteil (43) im Querschnitt kleiner als das Öffnungsglied (20) ist, wohingegen der äußere elastische Teil (42) einen Querschnitt aufweist, der größer als das Öffnungsglied ist.

26. Verfahren nach einem der Ansprüche 21 bis 25 ist, bei dem die Druckfläche zumindest einen radial ausgerichteten Kanal (42) zum Entlassen des Getränks entlang der Druckfläche (44) umfaßt.

27. Vorrichtung zum Zubereiten eines heißen Schaumgetränks mit einer Vorrichtung (3) und einer Kapsel (10) nach Anspruch 1, wobei die Vorrichtung (3) ein Gehäuse, das zum Aufnehmen der Kapsel in einer im wesentlichen festen Position angeordnet ist, wohingegen ermöglicht wird, daß sich zumindest die zweite Fläche (17) aufgrund der Wirkung eines Aufbaus von Innendruck nach außen verformt, und eine Reaktionskraft erzeugende Vorrichtung (4) umfaßt, **dadurch gekennzeichnet, daß** die eine Reaktionskraft erzeugende Vorrichtung (4) eingerichtet ist, um sich an dem Öffnungsglied (20) zu halten, und um das Öffnungsglied zu veranlassen, sich einwärts zu bewegen, um das Entlassen des Getränks als eine Folge des Unter-Druck-Setzens der Kapsel mit Wasser zu bewirken, und eine Druckfläche (41) umfaßt, die eingerichtet ist, um das Öffnungsglied als Reaktion auf den Innendruck zu halten, und bei der die Fläche (41) größer als das Öffnungsglied (20) ist.

28. Vorrichtung nach Anspruch 27, bei der die Druckfläche (41) eine gewölbte Fläche ist.

29. Vorrichtung nach Anspruch 27, bei der die Druckfläche einen festen Mittelteil (43) und einen äußeren elastischen Teil (44) umfaßt, der den Mittelteil umgibt, wobei der Mittelteil im Querschnitt kleiner als das Öffnungsglied ist, wohingegen der äußere elastische Teil einen Querschnitt aufweist, der größer als das Öffnungsglied ist.

30. Vorrichtung nach einem der Ansprüche 27 bis 29, bei der die Druckfläche (41) einen bestimmten vorbestimmten Spalt (d) von dem Öffnungsglied der Kapsel angeordnet ist, bevor das Unter-Druck-Setzen stattfindet, um das Halten an dem Öffnungsglied (20) und folglich das öffnen zu verzögern, bis ein hinreichender Druck in der Kapsel aufgebaut ist.

31. Vorrichtung nach Anspruch 27 bis 30, bei dem die eine Reaktionskraft erzeugende Vorrichtung (4) eine Vorrichtung zum Kanalbilden des Schaums und der Flüssigkeit umfaßt.

## Revendications

1. Capsule (10) pour la préparation d'une boisson obtenue par délivrance d'eau chaude à l'intérieur de la capsule, sous pression, et libération de la boisson de la capsule ; ladite capsule comprenant, à l'intérieur de celle-ci, une substance alimentaire, une première surface (12) apte à être traversée par un écoulement d'eau pénétrant la capsule, une seconde surface (17) apte à être traversée par un écoulement de boisson quittant la capsule, dans laquelle la seconde surface est apte à se déformer vers l'extérieur sous l'action de la pression d'eau intérieure qui lui est appliquée, **caractérisée en ce que** ladite surface comprend au moins un élément (20) d'ouverture capable de déformer la capsule vers l'intérieur, sous l'effet d'une force de réaction mécanique appliquée de l'extérieur sur l'élément d'ouverture, comme résultat de la déformation de ladite seconde surface en raison de l'établissement d'une pression intérieure.

2. Capsule selon la revendication 1, dans laquelle l'élément (20) d'ouverture comprend une ligne continue prédécoupée (21) formée à travers l'épaisseur de la seconde surface, et dans laquelle l'élément d'ouverture comprend un moyen (22) de pliage élastique qui est apte à provoquer un pliage de l'élément d'ouverture sous l'action de ladite force de réaction appliquée depuis l'extérieur au moyen de fermeture, pour assurer la libération de la boisson.

3. Capsule selon la revendication 2, dans laquelle le moyen (22) de pliage élastique comprend une unique partie pouvant être pliée (23) agencée par rapport à ladite ligne prédécoupée de sorte que l'élément d'ouverture peut se déplacer vers l'intérieur par pliage le long de ladite partie pouvant être pliée.

4. Capsule selon la revendication 2 ou 3, dans laquelle la ligne prédécoupée (21) est agencée de sorte que l'élément (20) d'ouverture forme un moyen formant vanne qui peut se fermer lors de la constitution de la pression provoquée par l'addition d'eau à l'intérieur de la capsule jusqu'au moins un certain niveau de pression.

5. Capsule selon la revendication 4, dans laquelle la ligne prédécoupée (21) forme un moyen formant vanne, un bord positif (24) de l'élément (20) d'ouverture étant maintenu sur un bord de forme complémentaire (25) de l'ouverture lors de la constitution de la pression à l'intérieur de la capsule.

6. Capsule selon la revendication 5, dans laquelle la ligne prédécoupée (21) est oblique.

7. Capsule selon la revendication 5, dans laquelle la ligne prédécoupée (21) est étagée.

8. Capsule selon la revendication 2 ou la revendication 3, dans laquelle la partie pouvant être pliée (23) a une dimension transversale inférieure à la dimension périphérique de la ligne prédécoupée (21).

9. Capsule selon la revendication 8, dans laquelle la partie pouvant être pliée (23) comprend en outre une ligne de faiblesse (26) favorisant le fléchissement de l'élément (20) d'ouverture le long d'une ligne privilégiée.

10. Capsule selon l'une quelconque des revendications 2 à 9, dans laquelle la ligne prédécoupée (21) a une largeur de 0,05 à 0,3 mm, de préférence de 0,1 à 0,2 mm.

11. Capsule selon l'une quelconque des revendications 2 à 10, dans laquelle l'élément (20) d'ouverture est délimité par une ligne prédécoupée (21) de façon à former sensiblement une partie d'un cercle.

12. Capsule selon l'une quelconque des revendications 2 à 11, dans laquelle la partie de cercle s'étend sur 270 à 350 degrés.

13. Capsule selon la revendication 12, dans laquelle la partie de cercle a un diamètre de 3 à 15 mm.

14. Capsule selon l'une quelconque des revendications précédentes, dans laquelle la substance alimentaire est un produit alimentaire soluble.

15. Capsule selon l'une quelconque des revendications précédentes, dans laquelle le produit alimentaire soluble est choisi à partir du groupe constitué de café, de thé, de cacao, de lait et de combinaisons de ceux-ci.

16. Procédé pour préparer une boisson chaude mousseuse, comprenant :
l'utilisation d'une capsule (10) selon la revendication 1 ;
l'utilisation d'eau chaude pénétrant la première surface et le mélange de la substance alimentaire avec l'eau et la constitution d'une pression à l'intérieur de la capsule pour préparer une boisson ;
l'utilisation d'un moyen (4) pour produire une force de réaction depuis l'extérieur de la capsule ; et
l'ouverture de la seconde surface (17) par application de ladite force de réaction mécanique à l'élément d'ouverture (20) comme résultat de la constitution de pression intérieure déformant ladite seconde surface.

17. Procédé selon la revendication 16, dans lequel l'élément (20) d'ouverture et le moyen (4) de production de force de réaction sont maintenus à une certaine distance, équivalant à un certain espace prédéterminé (d) avant la constitution de pression nécessaire dans la capsule.

18. Précédé selon la revendication 17, dans lequel ledit espace (d) va de 0 à 5 mm, de préférence de 0,1 à 3 mm.

19. Procédé selon la revendication 17 ou la revendication 18, dans lequel l'ouverture de l'élément (20) d'ouverture se fait par constitution d'une pression à l'intérieur de la capsule, pression suffisant à provoquer la déformation vers l'extérieur de la seconde surface (17) et son maintien sur le moyen (4) de production de force de réaction, en amenant ainsi le moyen d'ouverture à déformer le moyen (20) d'ouverture vers l'intérieur et à assurer ultérieurement la libération de pression et la distribution de la boisson.

20. Procédé selon l'une quelconque des revendications 16 à 19, dans lequel le moyen (4) de production de force de réaction est fixé en position par rapport à l'élément (20) d'ouverture.

21. Procédé selon l'une quelconque des revendications 17 à 20, dans lequel le moyen (4) de production de force de réaction comprend une surface (41) de pression apte à être maintenue sur l'élément (20) d'ouverture ; ladite surface étant plus grande que l'élément d'ouverture de façon à assurer l'ouverture de l'élément d'ouverture sans que la surface ne pénètre complètement l'intérieur de la capsule (10).

22. Procédé selon la revendication 21, dans lequel la surface (41) de pression est une surface bombée, surface ayant le même rayon ou un rayon plus petit que la partie centrale.

23. Procédé selon la revendication 22, dans lequel la surface (41) de pression bombée a une partie de rayon d'environ 40 à 80 mm.

24. Procédé selon la revendication 22 ou la revendication 23, dans lequel la surface (41) de pression bombée est pleine.

25. Procédé selon la revendication 21, dans lequel la surface de pression comprend une partie centrale pleine (43) et une partie extérieure élastique (42) entourant la partie centrale ; ladite partie centrale (43) ayant une section inférieure à l'élément (20) d'ouverture, tandis que la partie extérieure élastique (42) a une section supérieure à l'élément d'ouverture.

26. Procédé selon l'une quelconque des revendications 21 à 25, dans lequel la surface de pression comprend au moins un canal orienté radialement (42) servant à libérer la boisson le long de la surface (44) de pression.

27. Dispositif pour préparer une boisson chaude mousseuse comprenant un appareil (3) et une capsule (10) selon la revendication 1, dans lequel ledit appareil (3) comprend un boîtier agencé pour loger la capsule dans une position sensiblement fixe tout en permettant au moins à la seconde surface (17) de se déformer vers l'extérieur sous l'action de la constitution de pression intérieure, et un moyen (4) de production de force de réaction **caractérisé en ce que** le moyen (4) de production de force de réaction est apte à être maintenu sur l'élément (20) d'ouverture et à amener l'élément d'ouverture à se déplacer vers l'intérieur pour assurer la libération de la boisson comme résultat de la mise sous pression de la capsule par de l'eau, et comprend une surface (41) de pression apte à être maintenue sur l'élément d'ouverture en réaction à la pression intérieure, et dans lequel ladite surface (41) est plus grande que l'élément (20) d'ouverture.

28. Dispositif selon la revendication 27, dans lequel la surface (41) de pression est une surface bombée.

29. Dispositif selon la revendication 27, dans lequel la surface de pression comprend une partie centrale pleine (43) et une partie extérieure élastique (44) entourant la partie centrale ; ladite partie centrale ayant une section inférieure à l'élément d'ouverture, tandis que la partie extérieure élastique a une section plus grande que l'élément d'ouverture.

30. Dispositif selon l'une quelconque des revendications 27 à 29, dans lequel la surface (41) dé pression est agencée à un certain espace prédéterminé (d) de l'élément d'ouverture de la capsule avant que ne se fasse la mise sous pression, de façon à retarder le maintien sur l'élément (20) d'ouverture et, par conséquent, l'ouverture jusqu'à ce qu'une pression suffisante soit établie dans la capsule.

31. Dispositif selon les revendications 27 à 30, dans lequel ledit moyen (4) de production de force de réaction inclut un moyen servant à une canalisation de la mousse et du liquide.
